Europäisches Patentamt

**European Patent Office**

Office européen des brevets

(11) Veröffentlichungsnummer: **0 249 121**
B1

(12) **EUROPÄISCHE PATENTSCHRIFT**

(45) Veröffentlichungstag der Patentschrift:
05.09.90

(51) Int. Cl.⁵: **B23Q 1/02, F16C 29/02**

(21) Anmeldenummer: 87107911.7

(22) Anmeldetag: 02.06.87

(54) Schlitten für Werkzeugmaschinen, insbesondere als Werkzeugträger von Bohr- oder Fräsmaschinen.

(30) Priorität: 07.06.86 DE 3619213

(43) Veröffentlichungstag der Anmeldung:
16.12.87 Patentblatt 87/51

(45) Bekanntmachung des Hinweises auf die Patenterteilung:
05.09.90 Patentblatt 90/36

(84) Benannte Vertragsstaaten:
CH DE ES FR GB IT LI SE

(56) Entgegenhaltungen:
DE-B- 1 050 635
DE-C- 53 864
DE-C- 878 885
FR-A- 1 002 394
FR-A- 2 308 824
GB-A- 108 862
US-A- 2 367 156

(73) Patentinhaber: KM Werkzeugmaschinen GmbH,
Ulrichstrasse 95, D-7406 Mössingen(DE)

(72) Erfinder: Till, Konrad, Hohenzollernstrasse 18,
D-7401 Neustetten-Remmingsheim(DE)

(74) Vertreter: Möbus, Rudolf, Dipl.-Ing.,
Hindenburgstrasse 65, D-7410 Reutlingen(DE)

## Beschreibung

Die Erfindung betrifft eine Werkzeugmaschine, insbesondere Bohr- oder Fräsmaschine, mit einem Schlitten als Werkzeugträger und einem Führungsblock für den Schlitten.

Aus der FR-A 2 308 824 ist eine gleitende Führung zweier Elemente bekannt, die als Schlittenführung für Werkzeugträger eingesetzt werden kann, bei der im feststehenden Element eine im Querschnitt kreissektorförmige Aussparung angebracht ist mit einem Öffnungswinkel kleiner als 180°, in der ein zylindrischer Körper als Gleitschiene gelagert und verankert ist. Das bewegliche Element weist ebenfalls eine im Querschnitt kreissektorförmige Aussparung auf, die die Aussparung des feststehenden Elementes im Querschnitt zum Vollkreis ergänzt, und mit dem es auf dem zylindrischen Gleitkörper gelagert ist. Diese Konstruktion hat den Nachteil, daß sie hohe Herstellungskosten bedingt, da zwar die Aussparungen der beiden gegeneinander bewegbaren Elemente mit nur einer Bohrung realisierbar sind, aber der zylindrische Gleitkörper separat bearbeitet werden muß.

Der Erfindung liegt die Aufgabe zugrunde, eine Schlittenführung für Werkzeugmaschinen zu schaffen, die sich bei hoher Lagerungs- und Führungsqualität und bei hoher Fertigungsgenauigkeit dennoch preiswert herstellen läßt.

Die gestellte Aufgabe wird bei der Werkzeugmaschine der eingangs genannten Art erfindungsgemäß durch die im Hauptanspruch aufgeführten Merkmale gelöst.

Vorteilhafterweise kann ein quaderförmiger Führungsblock mit einem quadratischen Grundquerschnitt Verwendung finden, bei welchem die Achse der im Führungsblock ausgebildeten Viertelzylinder-Lagerfläche mit der fehlenden Kante des Führungsblockes übereinstimmt, also durch den am bearbeiteten Führungsblock fehlenden Eckpunkt des quadratischen Querschnittes des Führungsblockes verläuft.

Für erfindungsgemäß ausgebildete Werkzeugmaschinen können vier quaderförmige Führungsblöcke teilweise gemeinsam bearbeitet werden. Hierzu werden die vier Führungsblöcke zu einem viererblock zusammenmontiert. Anschließend werden durch ein zentrales Ausbohren des viererblockes in den vier einzelnen Führungsblöcken gleichzeitig die viertelzylinder-Lagerflächen vorgearbeitet. Nach einer Einzelbearbeitung der ebenen Anlageflächen der einzelnen Führungsblöcke können zur gleichzeitigen Feinbearbeitung (Bohren und Honen) der Viertelzylinder-Lagerflächen die vier Führungsblöcke erneut zusammengesetzt werden, bevor sie schließlich wieder einzeln nitriergehärtet werden.

Auch der die Form eines Zylinderringviertels aufweisende Führungsfuß des Schlittens läßt sich mittels Drehwerkzeugen und Fräswerkzeugen relativ kostengünstig herstellen.

Es ergeben sich große Lagerflächen mit einer entsprechend günstigen Lagerdruckverteilung. Die Schlittenführung ist kompakt und raumsparend, so daß auf einem Werkzeugmaschinenkörper mehrere unabhängig voneinander betätigbare Schlitteneinheiten relativ dicht nebeneinander anordenbar sind. Es ergibt sich in jeder Winkellageanordnung des Führungsblockes für den Schlittenfuß eine hohe Führungsgenauigkeit des Schlittens. Der Schlitten kann direkt als Spindelstockgehäuse ausgebildet werden, auf dessen Oberseite unmittelbar ein Antriebsträger befestigt werden kann, so daß geringe Abstände der Vorschubeinrichtungen von der Antriebsspindel eingehalten werden können, so daß die auf die Schlittenlagerung einwirkenden Kippmomente kleingehalten werden können.

Zweckmäßig kann der Führungsblock für den Führungsfuß des Schlittens so angeordnet sein, daß die durch eine erste Führungsleiste gebildete Gegenfläche für die eine der Ringschnittflächen des Führungsfußes vertikal und die durch eine zweite Führungsleiste gebildete Gegenfläche für die andere Ringschnittfläche des Führungsfußes horizontal verläuft. Die Viertelzylinder-Lagerfläche des Führungsblockes kann in ihrem mittleren Umfangsbereich mindestens bereichsweise auch vertieft sein, so daß sich freie, als Schmiermittel-Speicherstellen wirksame Lagerbereiche ergeben, in denen der Führungsfuß des Schlittens mit seiner Außenmantelfläche nicht an der Viertelzylinder-Lagerfläche anliegt.

Nachfolgend wird ein Ausführungsbeispiel eines erfindungsgemäß ausgebildeten Schlittens und der Schlittenführung anhand der beiliegenden, stark schematisierten Zeichnung näher erläutert.

Im einzelnen zeigen:

Fig. 1 eine schematische Querschnittsdarstellung von zwei parallel zueinander auf einem Werkzeugmaschinengehäuse verstellbar gelagerten Schlitten;

Fig. 2 eine perspektivische Darstellung eines ein Werkzeug tragenden Schlittens und seines Führungsblockes.

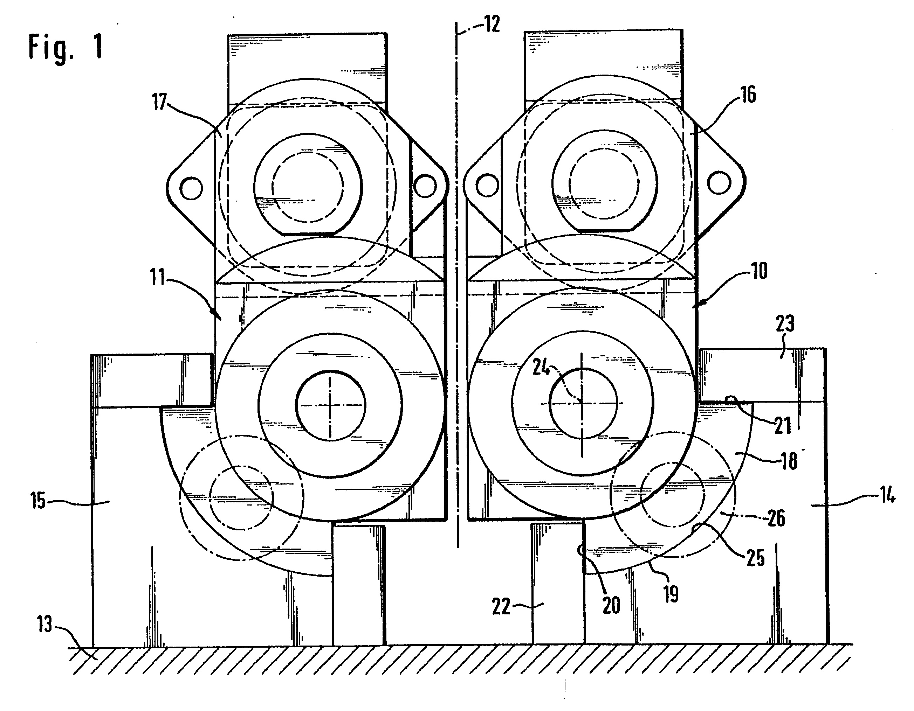

Fig. 1 zeigt zwei gleiche, als Spindelstockgehäuse ausgebildete Schlitten 10 und 11, die spiegelbildlich zu einer vertikalen Mittelebene 12 auf zwei gleichen, parallel zueinander verlaufenden und auf einem gemeinsamen Maschinengehäuse 13 befestigten Führungsblöcken 14 und 15 längsverstellbar gelagert sind. Auf jedem Schlitten 10 und 11 ist jeweils ein nicht näher dargestellter Antriebsträger 16 und 17 angeordnet. Nachfolgend wird nur einer der beiden Schlitten, nämlich der Schlitten 10 mit seinem Führungsblock 14, näher beschrieben.

Der quaderförmige Schlitten 10 ist in seinem einen unteren Eckbereich mit einem Führungsfuß 18 versehen, der die Form eines Viertels eines Kreiszylinderringes hat. Dessen Außenmantelfläche 19 und dessen beide Ringschnittflächen 20 und 21 bilden Gleitlagerflächen des Führungsfußes. Die Gegenlagerflächen für den Führungsfuß 18 des Schlittens 10 werden von dem quaderförmigen Führungsblock 14 und von zwei an diesem Führungsblock 14 befestigten Führungsleisten 22 und 23 gebildet. Wie am besten aus Fig. 1 ersichtlich ist, weist der quaderförmige Führungsblock 14 einen quadratischen Grundquerschnitt auf. Aus dem Führungsblock 14 ist ein Viertelzylindersektor eines Kreiszylinders herausgearbeitet, dessen Achse durch die entfernte linke obere Längskante des Führungsblockes 14 oder die linke obere Ecke 24 des aus Fig. 1 ersichtlichen Querschnittbildes verläuft. Dadurch ist im Führungsblock 14 eine Viertelzylinder-Lagerfläche 25 ausgebildet, die mit der Außenmantelfläche 19 des Führungsfußes 18 des Schlittens 10 zusammenwirkt. Die mit den Ringschnittflächen 20 und 21 zusammenwirkenden Gegenlagerflächen werden durch die am Führungsblock 14 befestigten Führungsleisten 22 und 23 gebildet.

Aus der Doppelschlittendarstellung der Fig. 1 läßt sich leicht erkennen, daß zur Herstellung der Viertelzylinder-Lagerflächen 25 des Führungsblockes 14 die beiden noch vollständigen quaderförmigen Führungsblöcke 14 und 15 dicht gegeneinandergeschoben und zwei weitere gleiche Führungsblöcke darauf aufgesetzt und zu einem Viererblock zusammengefügt werden können, der dann gemeinsam entlang der gegeneinanderliegenden vier Längskanten 24 aufgebohrt werden kann, wie bereits eingangs erwähnt worden ist.

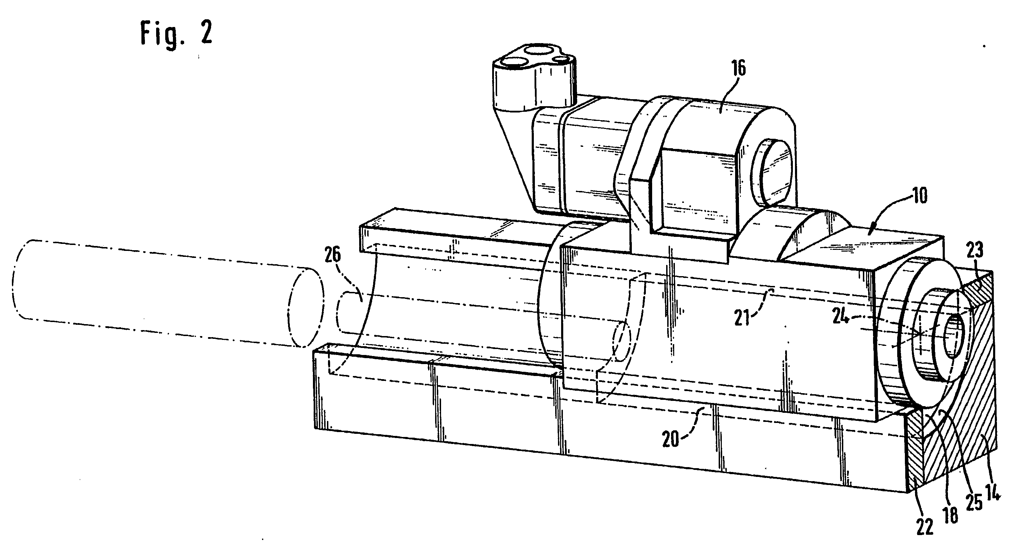

Der Schlitten 10 ist als Spindelstockgehäuse ausgebildet, in welchem eine zentrale Spindelbohrung ausgebildet ist, deren Achse durch den in Fig. 1 eingezeichneten Punkt 24 verläuft und in welcher eine in Fig. 2 schematisch dargestellte Spindel 24 eingreift oder ein Zylinder angreift.

Die Viertelzylinder-Lagerfläche 25 des Führungsblockes 14 kann in ihrem mittleren Umfangsbereich teilweise vertieft sein, so daß freie und als Schmiermittel-Speicherstellen wirksame Lagerbereiche entstehen, in denen der Führungsfuß 18 des Schlittens 10 nicht an der Viertelzylinder-Lagerfläche 25 anliegt.

## Patentansprüche

1. Werkzeugmaschine, insbesondere Bohr- oder Fräsmaschine, mit einem Schlitten (10, 11) als Werkzeugträger und einem Führungsblock (14, 15) für den Schlitten (10, 11), wobei der Schlitten (10, 11) einen Führungsfuß (18) aufweist, dessen Form einem Viertel eines Kreiszylinderringes entspricht, dessen Außenmantelfläche (19) und dessen Ringschnittflächen (20, 21) Gleitflächen bilden, von denen die Außenmantelfläche an einer entsprechend gestalteten viertelzylinder-Lagerfläche (25) anliegt, die an dem am Werkzeugmaschinengehäuse (13) befestigten quaderförmigen Führungsblock (14) ausgebildet ist, während die Gegenflächen für die Ringschnittflächen (20, 21) des Führungsfußes (18) durch am Führungsblock (14) befestigte Führungsleisten (22, 23) gebildet sind.

2. Werkzeugmaschine nach Anspruch 1, dadurch gekennzeichnet, daß der quaderförmige Führungsblock (14) einen quadratischen Grundquerschnitt aufweist und die Achse der im Führungsblock (14) ausgebildeten viertelzylinder-Lagerfläche (25) mit der entfernten Kante (24) des Führungsblockes übereinstimmt, also durch den fehlenden Eckpunkt (24) des quadratischen Grundquerschnittes des Führungsblockes (14) verläuft.

3. Werkzeugmaschine nach Anspruch 1 oder 2, dadurch gekennzeichnet, daß der Führungsblock (14) so angeordnet ist, daß die durch eine erste Führungsleiste (22) gebildete Gegenfläche für die eine der Ringschnittflächen (20) des Führungsfußes (18) vertikal und die durch eine zweite Führungsleiste (23) gebildete Gegenfläche für die andere Ringschnittfläche (21) des Führungsfußes (18) horizontal verläuft.

4. Werkzeugmaschine nach einem der Ansprüche 1 bis 3, dadurch gekennzeichnet, daß der Schlitten (10) als Spindelstockgehäuse ausgebildet ist, auf dessen Oberseite ein Antriebsträger (16) befestigt ist.

5. Werkzeugmaschine nach einem der Ansprüche 1 bis 4, dadurch gekennzeichnet, daß die viertelzylinder-Lagerfläche (25) des Führungsblockes (14) in ihrem mittleren Umfangsbereich mindestens bereichsweise vertieft ist, dergestalt, daß freie, als Schmiermittel-Speicherstellen wirksame Lagerbereiche entstehen, in denen der Führungsfuß (18) des Schlittens (10) mit seiner Außenmantelfläche (19) nicht an der viertelzylinder-Lagerfläche (25) anliegt.

## Revendications

1. Machine-outil, en particulier perceuse ou fraiseuse, avec un charoit (10, 11) comme porte-outil (10, 11) et un bloc de guidage (14, 15) pour le chariot (10, 11), le chariot (10, 11) comportant un pied de guidage (18) dont la forme correspond à un quart d'un anneau cylindrique circulaire, dont la surface périphérique extérieure (19) et dont les surfaces de section annulaires (20, 21) forment des surfaces de glissement dont la surface périphérique extérieure est appliquée contre une surface d'appui en quart de cylindre de conception correspondante (25) qui est formée sur le bloc de guidage parallélépipèdique (14) fixé au bâti de machine-outil (14), tandis que les surfaces antagonistes des surfaces de section annulaires (20, 21) du pied de guidage (18) sont formées par des lardons de guidage (22, 23) fixés au bloc de guidage (14).

2. Machine-outil conforme à la revendication 1, caractérisée en ce que le bloc de guidage parallélépipèdique (14) comporte une section transversale de base carrée et l'axe de la surface d'appui en quart de cylindre (25) formée dans le bloc de guidage (14) coïncide avec le bord éloigné (24) du bloc de guidage, c'est-à-dire passe par le point angulaire manquant (24) de la section transversale de base carrée du bloc de guidage (14).

3. Machine-outil conforme à la revendication 1 ou 2, caractérisée en ce que le bloc de guidage (14) est disposé de façon que la surface antagoniste formée par un premier lardon de guidage (22) pour l'une des surfaces de section annulaires (20) du pied de guidage (18) est verticale et la surface antagoniste formée par un second lardon de guidage (23) pour l'autre surface de section annulaire (21) du pied de guidage (18) est horizontale.

4. Machine-outil conforme à l'une des revendications 1 à 3, caractérisée en ce que le chariot (10) est conçu comme un boîtier de poupée sur lequel est fixée la partie supérieure d'un support d'entraînement (16).

5. Machine-outil conforme à l'une des revendications 1 à 4, caractérisée en ce que la surface d'appui en quart de cylindre (25) du bloc de guidage est évidée dans sa zone périphérique centrale, au moins en partie, de façon à créer des zones d'appui libres et agissant comme des réserves de lubrifiant, dans lesquelles la surface périphérique extérieure (19) du pied de guidage (18) du chariot (10) n'est pas appliquée contre la surface d'appui en quart de cylindre (25).

**Claims**

1. A machine tool, more especially a drilling or milling machine, having a carriage (10, 11) as tool support and a guide block (14, 15) for the carriage (10, 11), in which respect the carriage (10, 11) has a guide foot (18), the shape of which corresponds to a quarter of a circular cylinder ring, the outer jacket surface (19) of which and the annular sectional surfaces (20, 21) of which form sliding surfaces, of which the outer jacket surface butts against an appropriately formed quarter-cylinder bearing surface (25) which is formed on the parallelepipedic guide block (14) fastened to the machine-tool housing (13), whilst the counter-surfaces for the ring sectional surfaces (20, 21) of the guide foot (18) are formed by guide bars (22, 23) fastened to the guide block (14).

2. A machine tool according to claim 1, characterised in that the parallelepipedic guide block (14) has a basic square cross-section and the axis of the quarter-cylinder bearing surface (25) fashioned in the guide block (14) corresponds with the removed edge (24) of the guide block, thus extends through the missing corner point (24) of the basic square cross-section of the guide block (14).

3. A machine tool according to claim 1 or 2, characterised in that the guide block (14) is so arranged that the counter-surface, formed by a first guide bar (22), for one of the ring sectional surfaces (20) of the guide foot (18) extends vertically and the counter-surface, formed by a second guide bar (23), for the other ring sectional surface (21) of the guide foot (18) extends horizontally.

4. A machine tool according to one of claims 1 to 3, characterised in that the carriage (10) is designed as a headstock housing, on the upper side of which a drive support (16) is fastened.

5. A machine tool according to one of claims 1 to 4, characterised in that the quarter-cylinder bearing surface (25) of the guide block (14) is deepened in its central circumferential region at least in regions, in such a way that free bearing regions arise operative as lubricant storage places, in which the guide foot (18) of the carriage (10) does not but against the quarter-cylinder bearing surface (25) with its outer jacket surface (19).

Fig. 1

Fig. 2